# EUROPEAN PATENT SPECIFICATION

(11) **EP 4 019 451 B1**
(45) Date of publication and mention of the grant of the patent: **21.08.2024**
(21) Application number: 20216580.9
(22) Date of filing: 22.12.2020
(51) Int. Cl.: B66B 17/12

(54) **ELEVATOR COUNTERWEIGHT ASSEMBLY FOR ENERGY RECOVERY AND CORRESPONDING ELEVATOR SYSTEM**
AUFZUGSGEGENGEWICHTSANORDNUNG ZUR ENERGIERÜCKGEWINNUNG UND ENTSPRECHENDES AUFZUGSSYSTEM
ENSEMBLE CONTREPOIDS D'ASCENSEUR POUR LA RÉCUPÉRATION D'ÉNERGIE ET SYSTÈME D'ASCENSEUR CORRESPONDANT

(43) Date of publication of application: 29.06.2022
(73) Proprietor: EleVolt Ltd, London N1 7GU (GB)
(72) Inventor: LANE, Jason, London, SW11 7AD (GB)
(74) Representative: Novagraaf Technologies

(56) References cited:
- JP-A- 2003 246 564
- JP-A- H10 265 150
- US-A1- 2019 002 241

## Description

### TECHNICAL FIELD

Various example embodiments relate generally to a system and a device for energy recovery. The invention applies in particular to the area of elevators.

### BACKGROUND

Elevator systems typically comprise a cabin and a counterweight, both being guided in an elevator shaft in opposite directions. Both the cabin and counterweight are mechanically connected by one or more hoist ropes, for example steel ropes, slung over a grooved drive sheave the axle of which is connected to a gear box and an electrical motor in order to enable rotation of the drive sheave at a desired speed an into the right direction. The counterweight may have a mass approx. equal to that of the cabin, to which about half the maximum load of the cabin is added.

The energy consumption required by the elevator system to move the cabin up and down depends among other things on the relative weight of the cabin and its load (i.e. its occupancy) compared to the counterweight.

JP 2003 246564 describes an elevator system with a counterweight holding batteries.

### SUMMARY

According to the invention, an elevator counterweight assembly according to claim 1 is provided.

The counterweight comprises mechanical and electrical components allowing energy recovery when the counterweight moves. Electrical power generation and storage modules are housed in the counterweight and thus replace inert weight used in conventional counterweights.

According to an embodiment, said at least one mechanism for converting linear motion into rotatory motion comprises one among a bevel gear or a worm gear, wherein a first axis of said bevel gear or said worm gear is mechanically connected to a shaft of said at least one electric generator so as to induce a rotatory motion of said shaft of said at least one electric generator when said first axis rotates.

According to an embodiment, a second axis of said bevel gear or worm gear is connected to a wheel such that a rotation of said wheel induces rotation of said second axis, said wheel being adapted to be in contact with a surface parallel to a direction of motion of said assembly, so that said wheel rotates when said assembly is in motion.

According to an embodiment, said surface is part of, or fixed to, a mechanical guide for said assembly, for guiding the assembly in its linear motion.

According to an embodiment, said accumulator module comprises at least one among: at least one super capacitor; at least one ultra-capacitor; at least one battery.

According to the invention, the assembly further comprises a power transfer module for discharging said at least one accumulator to an electric power sink external to said assembly.

According to an embodiment, said power transfer module comprises at least one among:
- contacts adapted to enter into electrical contact with corresponding contacts external to said assembly; or
- an induction mat adapted to cooperate with another induction mat external to said assembly. According to an embodiment, the assembly further comprises a frame for holding said electrical energy generator module and said accumulator module, the size of said frame being adjustable according at least one dimension.

According to an embodiment, said electrical energy generator module comprises at least one plurality of generators, the shafts of said at least one plurality of generators being mechanically connected to form an alignment such that rotating the shaft of one generator induces rotation of the shaft of the other generators of said plurality of generators, wherein at least one shaft of the generators of said alignment is connected to one of said at least one mechanisms for converting a linear motion of said assembly into a rotatory motion.

According to an embodiment, said alignment of generators is arranged along a direction which is parallel or orthogonal compared to the intended direction of motion of said assembly.

According to an embodiment, the assembly further comprises a plurality of alignments of generators arranged along parallel and/or orthogonal directions.

According to an embodiment, respective mechanisms for converting a linear motion into a rotatory motion are provided at a first and a second shaft respectively at each extremity of an alignment of generators.

According to an embodiment, the assembly further comprises at least one among:
means for engaging and disengaging an element of said at least one mechanism for converting a linear motion of said assembly into a rotatory motion; a switch for opening and closing an electrical circuit for connecting and disconnecting all or part of the generators of said energy generator module from said accumulator module.

According to an embodiment, said mechanism for converting a linear motion of said assembly into a rotatory motion comprises as part of a chain of transmission of motion at least one among a kinetic flywheel module and a continuously variable transmission module.

According to an embodiment of the invention, an elevator system is provided, comprising:
- a cabin;
- a counterweight assembly as defined above;
- a drive unit mechanically connected to said cabin and said counterweight assembly through rope means.

Rope means can comprise one or more among: one or more ropes, one or more belts, one or more cables, one or more chains.

### BRIEF DESCRIPTION OF THE DRAWINGS

Example embodiments will become more fully understood from the detailed description given below and the accompanying drawings, which are given by way of illustration only and thus are not limiting of this disclosure.
FIG. 1 is a schematic diagram of an overview of an elevator system according to an embodiment of the invention;
FIG. 2 is a schematic diagram providing an overview of an energy recovery module and an accumulator module according to an embodiment of the invention;
FIG. 3 is a schematic diagram of a first exemplary embodiment of a counterweight;
FIG. 4 is a schematic diagram of a first exemplary embodiment of a mechanism used to convert linear motion into rotary motion;
FIG. 5 is a schematic diagram of a second exemplary embodiment of a counterweight;
FIG. 6 is a schematic diagram of a second exemplary embodiment of a mechanism used to convert linear motion into rotary motion.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments.

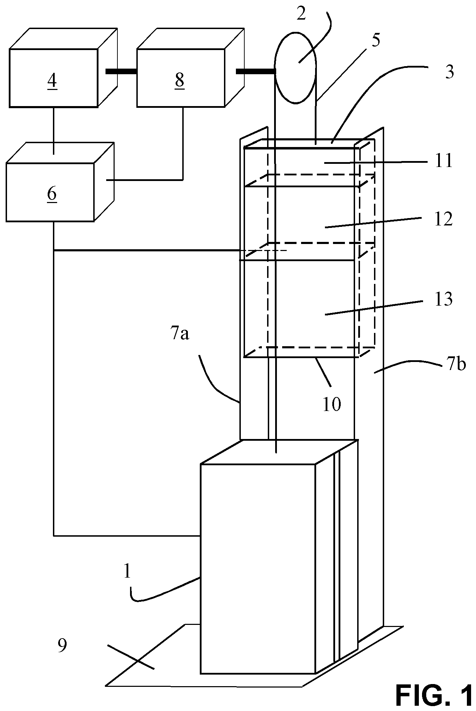

FIG. 1 shows an elevator system according to an exemplary embodiment. The system according to this embodiment comprises a cabin 1, a drive sheave 2, a counterweight 3, a motor 4, a rope or set of ropes 5, a control unit 6, counterweight guiding members 7a and 7b and optionally a gear box 8. Cabin and counterweight are attached to a set of steel ropes 5 (only one rope is shown in FIG. 1) slung over the drive sheave 2 and prevented from slipping by appropriately formed grooves of the drive sheave 2. The term `rope' is used to cover all possible alternatives to the function of the rope, i.e. allowing the motor to move cabin and counterweight into opposite direction. Alternatives may include for example one or more belts, one or more cables, one or more chains... The axis of the drive sheave 2 is connected to gear box 8, which in turn is connected to the axis of motor 4. Motor 4, gear box 8 (when present) and drive sheave 2 form a drive unit to move cabin 1 and counterweight 3 in opposite directions. The drive unit may be configured differently in other implementations (e.g. comprising more than one sheave). Control unit 6, which may comprise a processor, memory, software, a communication bus and appropriate control interfaces is connected to the different components of the system in order to allow control, status monitoring and fault processing. Although the control unit 6 is shown as a central unit, the different components may comprise their own control unit, partially or complete replacing the functions of the central control unit 6. The outlines 9 of the bottom of the elevator system shaft are also shown. The counterweight 3 is guided by lateral guiding members 7a and 7b (such as steel rods or rails) which are for example fixed to the vertical walls of the elevator system shaft. According to the present exemplary embodiment, counterweight 3 comprises a frame 10 housing an electrical energy generator module 11, an accumulator module 12 and one or more weights 13. FIG. 1 simply provides an overview of some components located on the counterweight 3. The combined weight of the frame 10, the generator module 11, the accumulator module, the weights 13 and possibly other components located on the counterweight are taken into account for calculating the overall weight of the counterweight needed within the elevator system. According to a variant embodiment, the generator module, the accumulator module and the weights are constructed in a modular fashion. For example, the accumulator module may be expanded by adding accumulator elements for additional storage capacity, and as a consequence, some weights may be removed to maintain an appropriate overall weight of the counterweight. Similarly, additional generators may be provided.

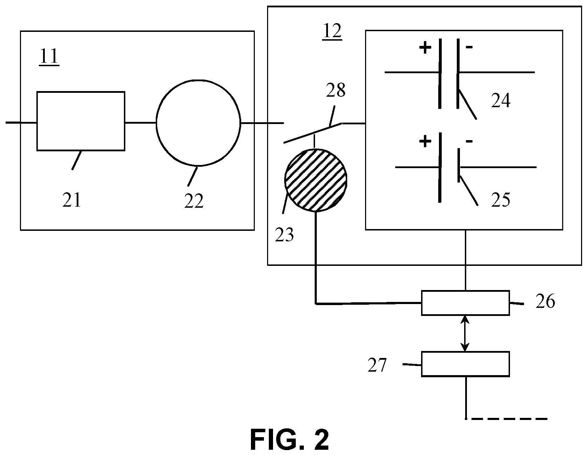

FIG. 2 is a schematic block diagram of the energy generator module 11, the accumulator module 12 and additional components used to schematically explain how electrical energy is recovered, stored and conveyed for further use according to one exemplary embodiment. The energy generator module 11 comprises a linear-to-rotary motion conversion mechanism 21 connected to the axis of an electrical generator 22. The function of mechanism 21 is to convert the linear motion of the counterweight 3 to a rotary motion capable of rotating the axis of generator 22, directly or through one or more intermediary modules. The function of the generator 22 is to produce electrical power to feed the accumulator module 12. Energy generator module 11 may comprise one or more mechanisms 21 and one or more generators 22. Several exemplary embodiments will be described later.

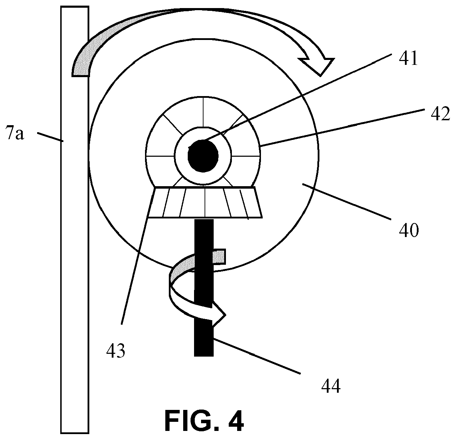

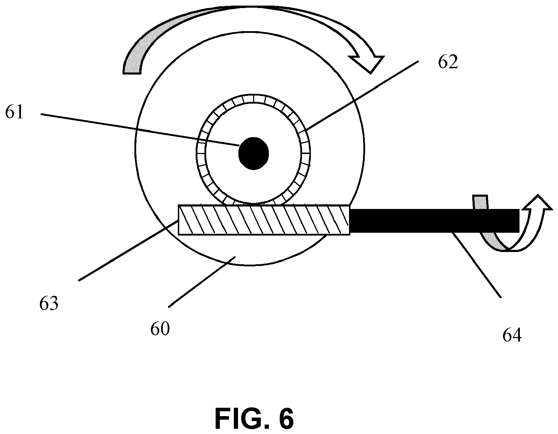

According to a variant embodiment, the energy generator module may comprise additional sub-modules. For example, the linear-to-rotary motion conversion mechanism 21 may be connected to a step-up gear box to increase the speed of rotation of the generator shaft compared to the output of the linear-to-rotary motion conversion mechanism 21. According to another variant embodiment, the linear-to-rotary motion conversion mechanism 21 may also or in addition be connected to the generator shaft through a continuously variable transmission, to provide a substantially constant speed of rotation to the generator shaft. According to yet another variant embodiment, which may be used in conjunction with other embodiments above, a kinetic flywheel is placed in the chain of elements providing the rotary motion to the generator. The function of the flywheel is to store energy when being rotated by another element of mechanism 21 (e.g. the output axis of the bevel gear or the worm gear that will be described later in conjunction with FIG. 4 and FIG. 6) and, through its inertia, restitute that energy by continuing rotating the generator shaft when the counterweight stops moving. According to yet another variant embodiment which can be used in conjunction with any of the above, the energy generator module comprises actuator means that enable mechanical disengagement and reengagement of an element of its element chain. This enables reducing or eliminating the braking effect on the motion of the counterweight when so desired.

The accumulator module comprises a battery management unit 23 which controls charging and discharging of accumulator elements. According to the example embodiment of FIG. 2, these accumulator elements comprise at least one capacitor (illustrated by element 24) and/or at least one battery (illustrated by element 25). The capacitor 24 can for example be a super- or ultra-capacitor. Battery management unit 23 monitors charging levels of the different accumulator elements and switches the power received from generator 22 to the accumulator element(s) as appropriate. The battery management unit 23 is also configured to electrically disconnect the accumulator module, entirely or element-by-element from the generator module 22 when certain conditions are met - this is schematically illustrated by switch 28. Conversely, generators may be disconnected or reconnected, partly or entirely, when certain conditions are met. Such conditions may for example include one or more of: an accumulator element is fully loaded or when it is undesirable to recover energy from the motion of counterweight 3. Other conditions may apply.

According to a variant embodiment, the accumulator comprises both capacitors and batteries.

Battery management unit 23 comprises a processor running software for controlling the capacitors and / or batteries. It determines the available accumulator elements and assesses the efficiency level of each element with regard to the required needs. For example, capacitors may typically charge and discharge more rapidly than batteries, if both types of elements are available. The battery management system may thus decide to prioritize capacitors as its primary charge, respectively discharge elements, compared to batteries, relying on the latter only if the former are fully charged, respectively discharged.

According to a variant embodiment, the battery management unit discharges capacitor accumulator elements into battery elements.

The diagram of FIG. 2 also shows a power transfer module 26 which is connected to the accumulator module. The function of power transfer module 26 is to discharge the accumulator elements to a sink 27, such as the grid of a power grid operator and/or the power system of the building housing the elevator system and/or to batteries and/or to the elevator main motor 4. According to the present embodiment, this transfer is performed under control of the battery management system 23. Transfer module 26 may be implemented as a first induction mat cooperating with a second induction mat 27 when the counterweight is not moving and located at certain positions within the shaft, such as the extreme upper and lower positions. Transfer module 26 may comprise more than one induction mat - such induction mats may be placed at several locations on the counterweight so that they automatically are placed facing their counterparts 27 within the shaft at the different locations of the counterweight.

When power is transferred to the elevator main motor itself, battery management unit 23 may determine how accumulator elements are used as a function of information concerning elevator operation. Such information may include one or more of the following: the number of elevator calls to be answered, the distance for the elevator to travel to answer a call, the load of the cabin. Such information may be provided to the battery management unit 23 by control unit 6. For short runs with limited load, the battery management may prioritize capacitor elements, whereas for longer runs with high load, it may prioritize battery elements.

According to the invention, the battery management unit 23 transfers power from the accumulator module to the elevator main motor as a function of the charge level of the accumulator module. Priority is given to the elevator main motor. E.g. if the accumulator module charge level is below a threshold, power is transferred only to the elevator main motor. Above the threshold, power is transferred to other sinks, such as the power grid. According to one embodiment, such a charge level may for example be 85% for batteries.

According to a variant embodiment, the accumulator module is used solely to power the elevator main motor and this functions in a 'closed loop'.

The elevator system also comprises conversion circuitry to convert the DC power provided by the accumulator elements to one or more sinks, e.g. when the accumulator elements provide power to the elevator main motor, the conversion circuitry may generate three-phase voltage. This conversion circuitry is not illustrated in the figures. Per se, power conversion circuitry is known to the Person Skilled in the Art and won't be described in more detail.

According to a variant embodiment, transfer module 26 comprises electrical contacts which cooperate with electrical contacts of sink 27 to discharge the accumulator elements.

According to a variant embodiment, frame 10 of counterweight 3 is adjustable in size according at least one direction. Frame 10 may also be referred to as a sling. Adjustment of the size allows taking into account different combinations of energy generator modules, accumulator modules and weights.

According to a variant embodiment, the frame is adjustable along the direction of motion of the counterweight 3. For this purpose, according to one example, the frame may comprise an upper frame element and a lower frame element. The upper frame element comprises an upper bar and two lateral bars respectively fixed to each end of the upper bar, to form an inverted U when in functioning position. The upper bar is destined to be attached to rope 5. The lower frame element comprises a lower bar and two lateral bars respectively fixed to each end of the lower bar, to form a U when in functioning position. Respective lateral bars of each of the upper and lower frame elements are destined to be fixed to form a rectangular frame. Before being fastened to each other, a pair of corresponding lateral bars may slide relative to each other so that a rectangular frame of adjustable size along the intended direction of motion is formed. Corresponding lateral bars may be fastened using appropriate means. For example, holes may be formed along the length of the lower frame element lateral bars at different positions corresponding to the different lengths of frame 10. Holes are also provided towards the extremity of the lateral bars of the upper frame element away from the upper bar. The lateral bars of the upper frame element and the lateral bars of the lower frame element are positioned so that the appropriate length of frame 10 is obtained and then fastened using fastening means such as bolts and nuts, with the bolts being placed through corresponding holes of a pair of corresponding lateral bars. Other interlocking means between corresponding lateral bars may be provided.

According to another variant embodiment, the frame 10 is adjustable in width, e.g. to accommodate different shaft widths and/or different spacing of the counterweight guides 7a and 7b.

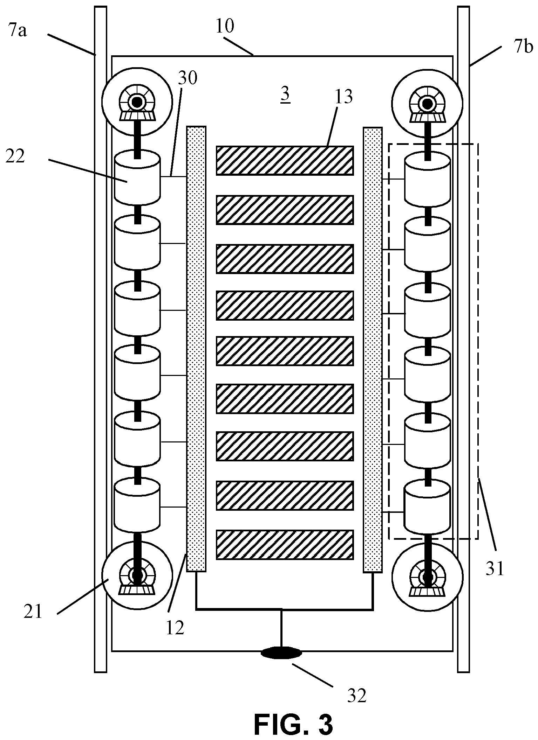

FIG. 3 is a schematic diagram of a first embodiment of counterweight 3. According to this embodiment, the counterweight comprises at least one stack 31 of generators 22 vertically aligned along - and connected by - their shafts. FIG. 3 illustrates a counterweight with two such stacks, each one being placed along a respective side of the counterweight. Each stack is connected to one or more a linear-to-rotary motion conversion mechanisms 21. In FIG. 3, the generator shafts at each extremity of a stack are connected to a corresponding linear-to-rotary motion conversion mechanism 21. Stacking of the generators reduces the required number of such mechanisms. The counterweight further comprises an accumulator module 12 split into two columns of accumulator elements. The interconnection of these columns and the battery management unit are not shown in FIG. 3. The generators 22 are connected to the accumulator module through appropriate wiring 30. The accumulator module is connected to contacts 32 allowing discharging of the accumulator elements under control of battery management unit 23 when the counterweight is in a given position (e.g. at its lowest position) and the contacts 32 touch corresponding contacts (not shown) external to the counterweight and connected to a power sink. The counterweight also comprises weights 13 under the form of a set of one or more weight bars.

Placing an energy generator module and accumulator module in the counterweight adds to the functionality of the latter. Inert weight is replaced with the weight of components having a utility in the frame of an elevator system.

FIG. 4 is a schematic diagram of a first embodiment of the linear-to-rotary motion conversion mechanism 21 which can be used in conjunction with the exemplary embodiment of FIG. 3. Mechanism 21 comprises a wheel or roller 40 with an axis 41. When in functioning position, roller 40 is placed against and in contact with guide 7a (or 7b) so that when the counterweight moves, the friction between the guide and the roller causes the roller to rotate around axis 41. A first gear 42 of a bevel gear assembly is fastened to axis 41. Rotation of first gear 42 causes rotation of a second gear 43 of the bevel gear assembly around axis 44. Axis 44 is fastened to the generator shaft (or, in variant embodiments, to an intermediate module, such as a kinetic flywheel, a continuously variable transmission, a gear box...). In accordance with the exemplary embodiment of FIG. 3, the axes of the gears are placed at 90°, but depending on positioning and orientation of the other elements of the electrical energy generator module 11, the angle may be different. According to a variant embodiment, mechanism 21 comprises an actuator (not illustrated) to engage and disengage gears 42 and 43 of the bevel gear assembly. According to another variant embodiment, mechanism 21 comprises an actuator to separate wheel 40 from, or to reestablish contact with, guides 7a or 7b. Actuators may be under the control of battery management unit 23 (e.g. when accumulator module elements are fully charged) or central control unit 6 (when braking of the counterweight is not desired).

According to an embodiment, the wheel 40 has a radius of 5 to 15 cm. At a speed of 5 m/s, wheel 40 then rotates between approx. 1000 and 3000 rpm. As an example, considering the embodiment of FIG. 3, a generator weighing 25 kilograms produces between 3 and 5 kW with an efficiency of 90%, a rotation speed of 2500 rpm, a stack with six generators would weigh around 150 kilograms and would produce around 20 kW.

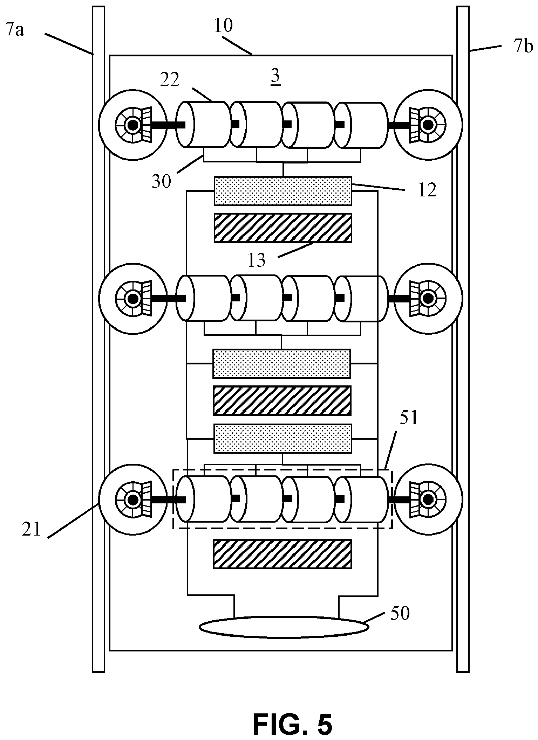

FIG. 5 is a schematic diagram of a second embodiment of a counterweight 3. According to this embodiment, the counterweight comprises at least one stack 51 of generators 22 horizontally aligned along - and connected by - their shafts. FIG. 5 illustrates a counterweight with three such stacks, placed in parallel with the upper and lower bars of frame 10 of counterweight 3. Each stack is connected to one or more a linear-to-rotary motion conversion mechanisms 21. In FIG. 5, the generator shafts at each extremity of a stack are connected to a corresponding linear-to-rotary motion conversion mechanism 21. The counterweight further comprises an accumulator module 12 split into three packs of accumulator elements. The interconnection of these packs and the battery management unit are not shown in FIG. 5. The generators 22 are connected to the accumulator module 12 through appropriate wiring 30. The counterweight also comprises weights 13 under the form of a set of one or more weight bars. The embodiment of FIG. 5 also comprises an induction mat 50 or another type of induction-based power transfer device that is connected to the packs of accumulator elements through appropriate wiring. Activation of the mat is controlled by battery control unit 23 (not shown). Mat 50 cooperates with a corresponding induction mat (not illustrated) placed in proximity of mat 50 when the counterweight is in its lowest position in the elevator shaft. More than one mat may be used. A similar induction-based power transfer module may be implemented with regard to the embodiment of FIG. 3 instead of the contacts shown in the first embodiment. Conversely, the contacts of the first embodiment of FIG. 3 may be used instead of the induction mat in the second embodiment of FIG. 5. The Person Skilled in the Art may devise other modules for transferring power from the accumulator module to an external sink.

FIG. 3 and FIG. 5 present two embodiments which use vertically and horizontally aligned generator stacks. Hybrid embodiments using both types of stacks may easily be devised by the Person Skilled in the Art. Also, generators or stacks thereof may be placed at an angle, with the linear-to-rotary motion conversion mechanisms 21 appropriately adapted.

FIG. 6 illustrates a second embodiment of the linear-to-rotary motion conversion mechanism 21. Mechanism 21 comprises a wheel or roller 60 with an axis 61. When in functioning position, roller 60 is placed against and in contact with one of the counterweight guides (not illustrated) so that when the counterweight moves, the friction between the guide and the roller causes the roller to rotate around axis 61. A gear wheel 62 is fastened to axis 61. Rotation of gear wheel 62 causes rotation of a threaded worm shaft 63, which extends axis 64. Axis 64 is fastened to shaft of generator 20, or an intermediate module. The same variants mentioned in relation with the embodiment of FIG. 3 apply to the embodiment of FIG. 6.

According to a numerical example taking into consideration much lighter generators than in the previous example, e.g. weighing 0,5 kilograms, and considering a speed of 3000 rpm and a 90% mechanical efficiency, these may produce 20 W each. With ten such generators per row (considering the embodiment of FIG. 5), this would represent a weight of 5 kilograms and generate 200W per row.

The above embodiments concern a counterweight that moves along a vertical path. The principles described herein may easily be adapted to paths that are not vertical, e.g. to oblique paths, provided that the wheel of mechanism 21 can remain in contact with a surface in order to rotate when the counterweight moves along the path.

## Claims

1. Elevator counterweight assembly (3) comprising
- an electrical energy generator module (11) comprising at least one electric generator (22) for generating electrical power when an axis of said at least one generator is rotated;
- an accumulator module (12) for storing electrical power produced by said electrical energy generator module (11);
- at least one mechanism (21) for converting a linear motion of said assembly into a rotatory motion for rotating the axis of said at least one electric generator;
- a power transfer module (26) for discharging said accumulator module to at least one electric power sink (27) external to said assembly (3); and **characterized by**
- a battery management unit (23) for causing the power transfer module (26) to discharge said accumulator module only to a main motor of a drive unit of an elevator if an accumulator module charge level is below a threshold, and to discharge said accumulator module to one or more other sinks if said accumulator module charge level is above said threshold.

2. Assembly according to claim 1, wherein said at least one mechanism (21) for converting linear motion into rotatory motion comprises one among a bevel gear (42, 43) or a worm gear (62, 63), wherein a first axis (41, 61) of said bevel gear or said worm gear is mechanically connected to a shaft of said at least one electric generator (22) so as to induce a rotatory motion of said shaft of said at least one electric generator when said first axis rotates.

3. Assembly according to claim 2, wherein a second axis (44, 64) of said bevel gear or worm gear is connected to a wheel (40, 60) such that a rotation of said wheel induces rotation of said second axis, said wheel being adapted to be in contact with a surface parallel to a direction of motion of said assembly, so that said wheel rotates when said assembly is in motion.

4. Assembly according to claim 3, wherein said surface is part of, or fixed to, a mechanical guide (7a, 7b) for said assembly, for guiding the assembly in its linear motion.

5. Assembly according to one of the claims 1 to 4, wherein said accumulator module (12) comprises at least one among: at least one super capacitor; at least one ultra capacitor; at least one battery.

6. Assembly according to claim 5, wherein when power is transferred to said main motor of said elevator, the battery management unit determines how accumulator elements are used as a function of information concerning elevator operation, said information including one or more among: a number of elevator calls to be answered; a distance for the elevator to travel to answer a call; a load of the cabin.

7. Assembly according to claim 6, wherein said power transfer module (26) comprises at least one among:
- contacts adapted to enter into electrical contact with corresponding contacts external to said assembly; or
- an induction mat (50) adapted to cooperate with another induction mat external to said assembly.

8. Assembly according to one of the claims 1 to 7, further comprising a frame for holding said electrical energy generator module (11) and said accumulator module (12), the size of said frame (10) being adjustable according at least one dimension.

9. Assembly according to one of the claims 1 to 8, wherein said electrical energy generator module comprises at least one plurality of generators (22), the shafts of said at least one plurality of generators being mechanically connected to form an alignment (31, 51) such that rotating the shaft of one generator induces rotation of the shaft of the other generators of said plurality of generators, wherein at least one shaft of the generators of said alignment is connected to one of said at least one mechanisms (21) for converting a linear motion of said assembly into a rotatory motion.

10. Assembly according to claim 9, wherein said alignment (31, 51) of generators is arranged along a direction which is parallel or orthogonal compared to the intended direction of motion of said assembly (3).

11. Assembly according to claim 10, comprising a plurality of alignments (31, 51) of generators arranged along parallel and/or orthogonal directions.

12. Assembly according to one of the claims 9 to 11, wherein respective mechanisms (21) for converting a linear motion into a rotatory motion are provided at a first and a second shaft respectively at each extremity of an alignment (31, 51) of generators.

13. Assembly according to one of the claims 1 to 12, further comprising at least one among: means for engaging and disengaging an element of said at least one mechanism for converting a linear motion of said assembly into a rotatory motion; a switch (28) for opening and closing an electrical circuit for connecting and disconnecting all or part of the generators of said energy generator module (11) from said accumulator module (12).

14. Assembly according to one of the claims 1 to 13, wherein said mechanism (21) for converting a linear motion of said assembly into a rotatory motion comprises as part of a chain of transmission of motion at least one among a kinetic flywheel module and a continuously variable transmission module.

15. Elevator system comprising:
- a cabin (1);
- a counterweight assembly (3) according to one of the claims 1 to 14;
- a drive unit (2, 4, 8) mechanically connected to said cabin and said counterweight assembly through rope means (5).

## Patentansprüche

1. Aufzugsgegengewichtsbaugruppe (3) umfassend
- ein Elektroenergiegeneratormodul (11), umfassend mindestens einen Elektrogenerator (22) zum Erzeugen von elektrischer Leistung, wenn eine Achse des mindestens einen Generators gedreht wird;
- ein Akkumulatormodul (12) zum Speichern von elektrischer Leistung, die durch das Elektroenergiegeneratormodul (11) erzeugt wird;
- mindestens einen Mechanismus (21) zum Umwandeln einer Linearbewegung der Baugruppe in eine Drehbewegung zum Drehen der Achse des mindestens einen Elektrogenerators;
- ein Leistungsübertragungsmodul (26) zum Entladen des Akkumulatormoduls zu mindestens einer Senke (27) für elektrische Leistung außerhalb der Baugruppe (3); und **gekennzeichnet durch**
- eine Batterieverwaltungseinheit (23) zum Bewirken, dass das Leistungsübertragungsmodul (26) das Akkumulatormodul nur an einen Hauptmotor einer Antriebseinheit eines Aufzugs entlädt, falls ein Ladungsniveau des Akkumulatormoduls unter einem Schwellenwert liegt, und das Akkumulatormodul an eine oder mehrere andere Senken entlädt, falls das Ladungsniveau des Akkumulatormoduls über dem Schwellenwert liegt.

2. Baugruppe nach Anspruch 1, wobei der mindestens eine Mechanismus (21) zum Umwandeln von Linearbewegung in Drehbewegung eines unter Folgendem umfasst: ein Kegelrad (42, 43) oder ein Schneckenrad (62, 63), wobei eine erste Achse (41, 61) des Kegelrads oder des Schneckenrads mit einer Welle des mindestens einen Elektrogenerators (22) mechanisch verbunden ist, um eine Drehbewegung der Welle des mindestens einen Elektrogenerators zu induzieren, wenn sich die erste Achse dreht.

3. Baugruppe nach Anspruch 2, wobei eine zweite Achse (44, 64) des Kegelrads oder des Schneckenrads mit einem Rad (40, 60) derart verbunden ist, dass eine Drehung des Rads eine Drehung der zweiten Achse induziert, wobei das Rad angepasst ist, um mit einer Oberfläche parallel zu einer Bewegungsrichtung der Baugruppe in Kontakt zu stehen, so dass sich das Rad dreht, wenn die Baugruppe in Bewegung ist.

4. Baugruppe nach Anspruch 3, wobei die Oberfläche Teil einer mechanischen Führung (7a, 7b) für die Baugruppe ist oder an einer solchen befestigt ist, zum Führen der Baugruppe in ihrer Linearbewegung.

5. Baugruppe nach einem der Ansprüche 1 bis 4, wobei das Akkumulatormodul (12) mindestens eines unter Folgendem umfasst: mindestens einen Superkondensator; mindestens ein Ultrakondensator; mindestens eine Batterie.

6. Baugruppe nach Anspruch 5, wobei wenn Leistung an den Hauptmotor des Aufzugs übertragen wird, die Batterieverwaltungseinheit bestimmt, wie die Akkumulatorelemente in Abhängigkeit von Informationen, die den Aufzugsbetrieb betreffen, verwendet werden, wobei die Informationen eines oder mehrere unter Folgendem einschließen: eine Anzahl von Aufzugsrufen, die zu beantworten sind; eine Entfernung, die der Aufzug zurücklegen muss, um einem Ruf zu entsprechen; eine Last der Kabine.

7. Baugruppe nach Anspruch 6, wobei das Leistungsübertragungsmodul (26) mindestens eines unter Folgendem umfasst:
- Kontakte, die geeignet sind, um in elektrischen Kontakt mit entsprechenden Kontakten außerhalb der Baugruppe zu treten; oder
- eine Induktionsmatte (50), die geeignet ist, um mit einer anderen Induktionsmatte außerhalb der Baugruppe zusammenzuwirken.

8. Baugruppe nach einem der Ansprüche 1 bis 7, ferner umfassend einen Rahmen zum Halten des Elektroenergiegeneratormoduls (11) und des Akkumulatormoduls (12), wobei die Größe des Rahmens (10) hinsichtlich mindestens einer Dimension einstellbar ist.

9. Baugruppe nach einem der Ansprüche 1 bis 8, wobei das Elektroenergiegeneratormodul mindestens eine Vielzahl von Generatoren (22) umfasst, die Wellen der mindestens einen Vielzahl von Generatoren mechanisch verbunden sind, um eine Reihe (31, 51) derart auszubilden, dass ein Drehen der Welle eines Generators eine Drehung der Wellen der anderen Generatoren der Vielzahl von Generatoren induziert, wobei mindestens eine Welle der Generatoren der Reihe mit einem der mindestens einen Mechanismen (21) verbunden ist, zum Umwandeln einer Linearbewegung der Baugruppe in eine Drehbewegung.

10. Baugruppe nach Anspruch 9, wobei die Reihe (31, 51) der Generatoren entlang einer Richtung angeordnet ist, die parallel oder rechtwinklig im Verhältnis zu der beabsichtigten Bewegungsrichtung der Anordnung (3) verläuft.

11. Baugruppe nach Anspruch 10, umfassend eine Vielzahl von Reihen (31, 51) von Generatoren, die entlang paralleler und/oder orthogonaler Richtungen angeordnet sind.

12. Baugruppe nach einem der Ansprüche 9 bis 11, wobei entsprechende Mechanismen (21) zum Umwandeln einer Linearbewegung in eine Drehbewegung an einer ersten beziehungsweise einer zweiten Welle an jedem Endpunkt einer Reihe (31, 51) von Generatoren bereitgestellt sind.

13. Baugruppe nach einem der Ansprüche 1 bis 12, ferner umfassend mindestens eines unter Folgendem: Mittel zum Eingreifen und Lösen eines Elements des mindestens einen Mechanismus zum Umwandeln einer Linearbewegung der Baugruppe in eine Drehbewegung; einen Schalter (28) zum Öffnen und Schließen einer elektrischen Schaltung zum Verbinden und Trennen aller oder eines Teils der Generatoren des Energiegeneratormoduls (11) von dem Akkumulatormodul (12).

14. Baugruppe nach einem der Ansprüche 1 bis 13, wobei der Mechanismus (21) zum Umwandeln einer Linearbewegung der Baugruppe in eine Drehbewegung als Teil einer Bewegungsübertragungskette mindestens eines unter Folgendem umfasst: ein Kinetikschwungradmodul und ein Variatorgetriebemodul.

15. Aufzugssystem , umfassend:
- eine Kabine (1);
- eine Gegengewichtsbaugruppe (3) nach einem der Ansprüche 1 bis 14;
- eine Antriebseinheit (2, 4, 8), die mit der Kabine und der Gegengewichtsbaugruppe über Seilmittel (5) mechanisch verbunden ist.

## Revendications

1. Ensemble de contrepoids d'ascenseur (3) comprenant
- un module générateur d'énergie électrique (11) comprenant au moins un générateur électrique (22) pour générer de l'énergie électrique lorsqu'un axe dudit au moins un générateur est en rotation ;
- un module accumulateur (12) pour stocker l'énergie électrique produite par ledit module générateur d'énergie électrique (11) ;
- au moins un mécanisme (21) pour convertir un mouvement linéaire dudit assemblage en un mouvement rotatif pour faire tourner l'axe dudit au moins un générateur électrique ;
- un module de transfert d'énergie (26) pour décharger ledit module d'accumulation vers au moins une source d'énergie électrique (27) extérieure à l'ensemble (3) ; et **caractérisé par**
- une unité de gestion de la batterie (23) pour faire en sorte que le module de transfert de puissance (26) décharge ledit module d'accumulateur uniquement vers un moteur principal d'une unité d'entraînement d'un ascenseur si le niveau de charge du module d'accumulateur est inférieur à un seuil, et qu'il décharge ledit module d'accumulateur vers un ou plusieurs autres puits si le niveau de charge du module d'accumulateur est supérieur au seuil en question.

2. Assemblage selon la revendication 1, dans lequel ledit au moins un mécanisme (21) pour convertir un mouvement linéaire en mouvement rotatif comprend un parmi un engrenage conique (42, 43) ou un engrenage à vis sans fin (62, 63), dans lequel un premier axe (41, 61) dudit engrenage conique ou dudit engrenage à vis sans fin est relié mécaniquement à un arbre dudit au moins un générateur électrique (22) de manière à induire un mouvement rotatif dudit arbre dudit au moins un générateur électrique lorsque ledit premier axe tourne.

3. Assemblage selon la revendication 2, dans lequel un second axe (44, 64) dudit engrenage conique ou à vis sans fin est relié à une roue (40, 60) de telle sorte qu'une rotation de ladite roue induit une rotation dudit second axe, ladite roue étant adaptée pour être en contact avec une surface parallèle à une direction de mouvement dudit assemblage, de telle sorte que ladite roue tourne lorsque ledit assemblage est en mouvement.

4. Assemblage selon la revendication 3, dans lequel ladite surface fait partie ou est fixée à un guide mécanique (7a, 7b) pour ledit assemblage, pour guider l'assemblage dans son mouvement linéaire.

5. Assemblage selon l'une des revendications 1 à 4, dans lequel ledit module accumulateur (12) comprend au moins l'un parmi : au moins un super condensateur ; au moins un ultra-condensateur ; au moins une batterie.

6. Ensemble selon la revendication 5, dans lequel, lorsque l'énergie est transférée au moteur principal de l'ascenseur, l'unité de gestion de la batterie détermine la façon dont les éléments de l'accumulateur sont utilisés en fonction d'informations concernant le fonctionnement de l'ascenseur, lesdites informations comportant un ou plusieurs éléments parmi : un nombre d'appels d'ascenseur à répondre ; une distance que l'ascenseur doit parcourir pour répondre à un appel ; un chargement de la cabine.

7. Assemblage selon la revendication 6, dans lequel ledit module de transfert de puissance (26) comprend au moins un parmi :
- des contacts adaptés pour entrer en contact électrique avec des contacts correspondants extérieurs à l'assemblage ; ou
- un tapis d'induction (50) adapté pour coopérer avec un autre tapis d'induction extérieur à cet assemblage.

8. Ensemble selon l'une des revendications 1 à 7, comprenant en outre un cadre pour le maintien dudit module générateur d'énergie électrique (11) et dudit module accumulateur (12), la taille dudit cadre (10) étant réglable selon au moins une dimension.

9. Ensemble selon l'une des revendications 1 à 8, dans lequel ledit module générateur d'énergie électrique comprend au moins une pluralité de générateurs (22), les arbres de ladite au moins pluralité de générateurs étant reliés mécaniquement pour former un alignement (31,51) tel que la rotation de l'arbre d'un générateur induit la rotation de l'arbre des autres générateurs de ladite pluralité de générateurs, dans lequel au moins un arbre des générateurs dudit alignement est relié à l'un desdits au moins un mécanisme (21) pour convertir un mouvement linéaire de cet ensemble en un mouvement rotatif.

10. Assemblage selon la revendication 9, dans lequel ledit alignement (31, 51) des générateurs est disposé le long d'une direction parallèle ou orthogonale par rapport à la direction de mouvement prévue dudit assemblage (3).

11. Assemblage selon la revendication 10, comprenant plusieurs alignements (31, 51) de générateurs disposés selon des directions parallèles et/ou orthogonales.

12. Ensemble selon l'une des revendications 9 à 11, dans lequel des mécanismes respectifs (21) de conversion d'un mouvement linéaire en un mouvement rotatif sont prévus sur un premier et un second arbre respectivement à chaque extrémité d'un alignement (31, 51) de générateurs.

13. Assemblage selon l'une des revendications 1 à 12, comprenant en outre au moins l'un parmi : des moyens pour venir en prise et désolidariser un élément dudit au moins un mécanisme pour convertir un mouvement linéaire dudit assemblage en un mouvement rotatif ; un interrupteur (28) pour ouvrir et fermer un circuit électrique afin de connecter et déconnecter tous ou une partie des générateurs dudit module générateur d'énergie (11) dudit module accumulateur (12).

14. Ensemble selon l'une des revendications 1 à 13, dans lequel ledit mécanisme (21) de conversion d'un mouvement linéaire dudit ensemble en un mouvement rotatif comprend, dans une chaîne de transmission de mouvement, au moins un module parmi un module de volant cinétique et un module de transmission à variation continue.

15. Système d'ascenseur comprenant :
- une cabine (1) ;
- un ensemble contrepoids (3) selon l'une quelconque des revendications 1 à 14 ;
- une unité d'entraînement (2, 4, 8) reliée mécaniquement à ladite cabine et audit ensemble de contrepoids par l'intermédiaire de moyens à corde (5).
